# EUROPEAN PATENT SPECIFICATION

(11) **EP 0 870 588 B1**
(45) Date of publication and mention of the grant of the patent: **21.07.2004**
(21) Application number: 97933030.5
(22) Date of filing: 25.07.1997
(51) Int. Cl.: B29C 45/02, B29C 45/14, B29C 45/28, H01L 21/56, B29C 45/18

(54) **RESIN MOLDING APPARATUS**
VORRICHTUNG ZUM HARZFORMEN
APPAREIL DE MOULAGE DE RESINE

(30) Priority: 25.07.1996 JP 19672296; 14.10.1996 JP 27042896; 15.10.1996 JP 27263596
(43) Date of publication of application: 14.10.1998
(73) Proprietor: MATSUSHITA ELECTRIC WORKS, LTD., Kadoma-shi Osaka 571 (JP)
(72) Inventor: NISHIDE, Yasutaka, Yokkaichi-shi, Mie 510 (JP); TANAHASHI, Yasunori, Mie-gun, Mie 510-12 (JP); HATTORI, Kazuo, Suzuka-shi, Mie 510-02 (JP)
(74) Representative: Strehl Schübel-Hopf & Partner
(86) International application number: PCT/JP1997/002592
(87) International publication number: WO 1998/004395

(56) References cited:
- JP-A- 60 251 635
- MICROFILM OF THE SPECIFICATION AND DRAWINGS ANNEXED TO THE WRITTEN APPLICATION OF JAPANESE UTILITY MODEL, Application No. 13457/1983 (Laid-Open No. 120128/1984) (NEC HOME ELECTRONICS LTD.), 13 August 1984.

## Description

### BACKGROUND OF THE INVENTION

### TECHNICAL FIELD

The present invention relates to a resin molding apparatus for a transfer molding.

### BACKGROUND ART

In the past, a transfer molding method has been performed to seal semiconductor elements or the like with a thermosetting resin such as an epoxy resin, phenol resin or an unsaturated polyester resin.

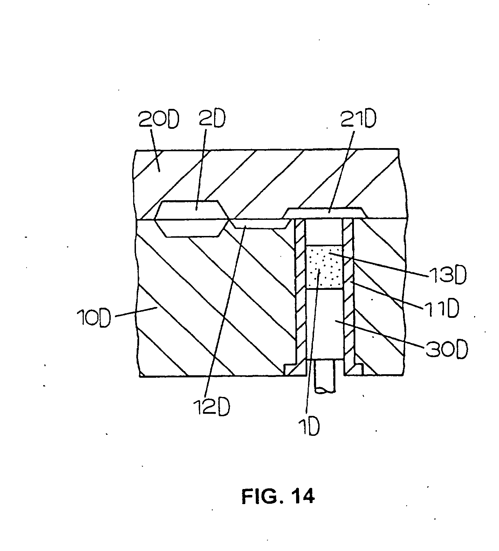

As shown in FIG. 14, a single-plunger type molding apparatus for a transfer molding comprises an upper mold **20D**, a lower mold **10D**, a heater (not shown) for heating the upper and lower molds, a mold cavity **2D** formed between the upper and lower molds. The lower mold **10D** has a lower cylinder **11D** and a plunger **30D** slidable along an inner wall of the lower cylinder. On the other hand, the upper mold **20D** has a concave **21D** for a cull, which is formed at a position facing to the lower cylinder **11D**. When the upper mold **20D** is clamped to the lower mold **10D**, a side end of the concave **21D** connects with a runner **12D** formed in a top surface of the lower mold. As a result, the mold cavity **2D** is connected with an inner space **13D** of the lower cylinder **11D** through the runner **12D** and the concave **21D** to obtain a resin channel.

As explained below, a transfer molding method is performed to obtain a molded article by the use of this molding apparatus. For preventing the occurrence of voids in the molded article, a powder-like resin material **1D** such as a thermosetting resin or the like is preformed to a tablet shape to remove an air included in the powder-like resin material. After the pressed resin material having the tablet shape is charged into the lower cylinder **11D**, it is pressed by an upward movement of the plunger **30D** while being heated by the heater. The pressed and heated resin material is supplied to the mold cavity **2D** through the runner **12D**.

By this transfer molding method, it is possible to prevent the occurrence of voids in the molded article. However, there are problems of increasing production steps as a whole, and causing a cost-up due to the introduction of a pretreatment apparatus of preforming the powder-like resin material to the tablet shape. Therefore, it is desired to perform the transfer molding method by using the powder-like resin material without the pretreatment. However, it is difficult to prevent the occurrence of voids by using the molding apparatus of the prior art without the pretreatment.

JP-A-59-108214 discloses a molding apparatus, wherein a single plunger presses a resin into a molding cavity. The mold injection is controlled by a simple shutter means.

JP-U-58-13457 describes a resin molding apparatus having cavities on either side of a single pressurising plunger. This document further discloses a viscosity detecting means to control a shutter such that the resin material does not enter the cavities before being in a completely fluid state.

Both documents mention the problem of voids in the molded article, but fail to recognise that the injection speed of the resin material to the cavity is critical for the occurrence of such voids.

For improving the above problems, the present invention as set out in claim 1 provides a resin molding apparatus for producing a molded article from a powder-like resin material while preventing the occurrence of void defectives without a pretreatment of preforming the resin material into a tablet shape.

According to an example, the molding apparatus comprises an upper mold, a lower mold having a cylinder, a heater for heating the upper and lower molds, a first plunger slidable along an inner wall of the cylinder, a mold cavity formed in a configuration of the molded article between the upper and lower molds, a runner connecting between the mold cavity and a space into which the resin material is charged, i.e., a space surrounded with the inner wall of the cylinder, the first plunger, and the upper mold disposed at the opposite side of the first plunger, and a gate member movable between a close position and an open position of the runner. At the close position, the charged resin material is pressed by a movement of the first plunger while being indirectly heated by the heater. At the open position, the resin material in a substantially melted state is pressed and supplied to the mold cavity by a further movement of the first plunger.

In the invention the upper mold is formed with the following components. That is, the upper mold comprises a second cylinder having a lager diameter than the first cylinder of the lower mold, and a second plunger slidable along an inner wall of the second cylinder. The upper mold is disposed on the lower mold such that an inside of the second cylinder is joined with that of the first cylinder. The second plunger acting as the gate member makes the close position of the runner when being pressed against the lower mold. The upper mold also has a pressure loading unit and a pressure release unit, The pressure loading unit applies a load to the second plunger toward the lower mold when the resin material is pressed between the first and second plungers while the close position of the runner being kept. The pressure release unit removes the load applied to the second plunger. The second plunger makes the open position of the runner when being spaced away from the lower mold.

It is also preferred that the gate member is formed with a pin projectable into the runner.

It is further preferred that the gate member is formed with a slide block which is slidably supported in a direction of crossing the runner. The slide block has a through hole extending in a lengthwise direction of the runner. When the slide block is moved in the direction of crossing the runner such that the through hole comes into a registration with the runner, the open position of the runner is obtained.

These and still other objects and advantages will become apparent from the following description of the preferred embodiments of the invention when taken in conjunction with the attached drawings.

### BRIEF DESCRIPTION OF THE DRAWINGS

FIG. 1 is a top view of a resin molding apparatus of the prior art;
FIG. 2 is a front view of the resin molding apparatus of the prior art;
FIG. 3 is a side view of the resin molding apparatus of the prior art;
FIG. 4 is a cross-sectional view of a molding unit **A1** of the molding apparatus of the prior art;
FIGS. 5A to 5D show a transfer molding method using the molding unit **A1** of the prior art;
FIGS. 6A and 6B show a removing step of a molded article;
FIG. 7 is a modification of the molding unit **A1**;
FIGS. 8A and 8B show an action of a slide block;
FIGS. 9A to 9D show a transfer molding method using a molding unit **A2** of the present invention;
FIG. 10 is a control diagram of first and second plungers;
FIGS. 11A to 11D show a transfer molding method using a molding unit **A3** of the present invention;
FIG. 12 is a front view of a unit **B** for measuring and supplying a powder-like resin material;
FIGS. 13A and 13B illustrate an action of a measuring section of the unit **B**; and
FIG. 14 is a resin molding apparatus of the prior art.

### PREFERRED EMBODIMENTS OF THE INVENTION

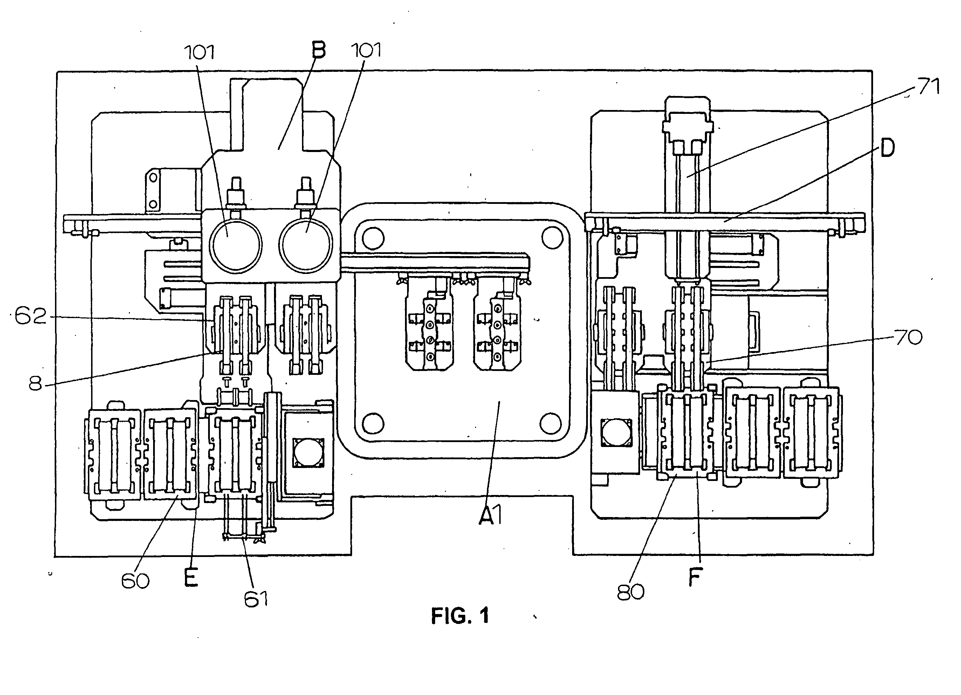

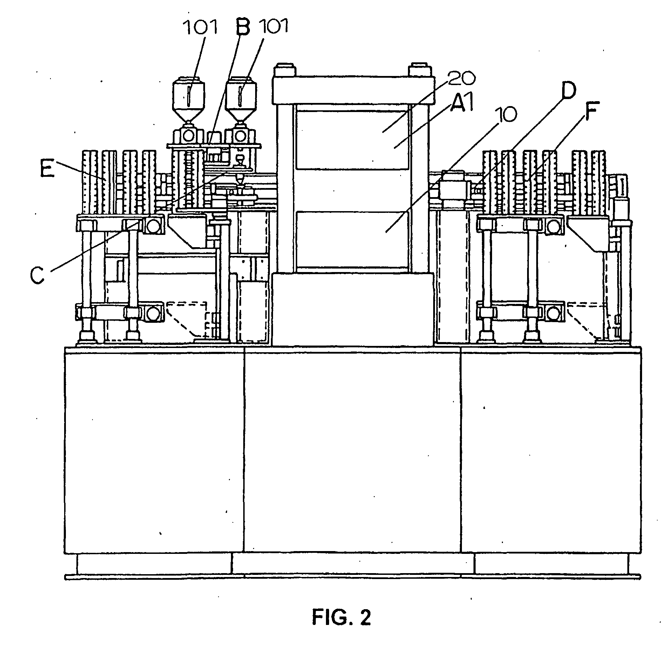

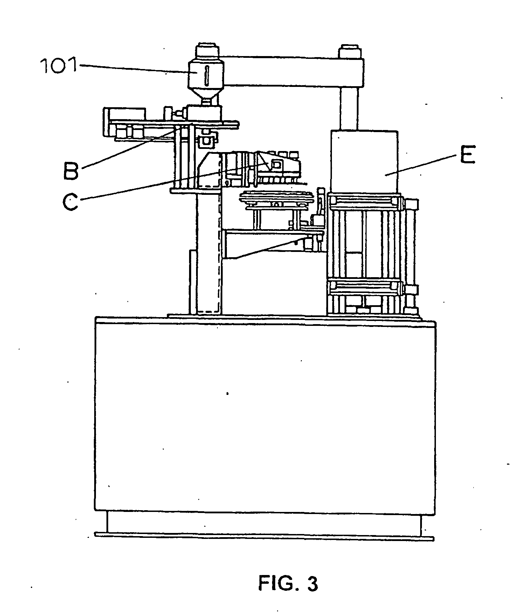

Figs 1-8 show aspects of the prior art which are incorporated into the invention.

As shown in FIGS. 1 to 3, a resin molding apparatus formed with a molding unit **A1** for performing a transfer molding step, a unit **B** for measuring a powder-like resin material and supplying the resin material to the molding unit, a unit **C** for supplying a frame member to be sealed with the resin material to the molding unit, a unit **D** for removing a molded article from the molding unit after the transfer molding step, a unit **E** for providing the frame member to the unit **C**, and a unit **F** for storing the molded article.

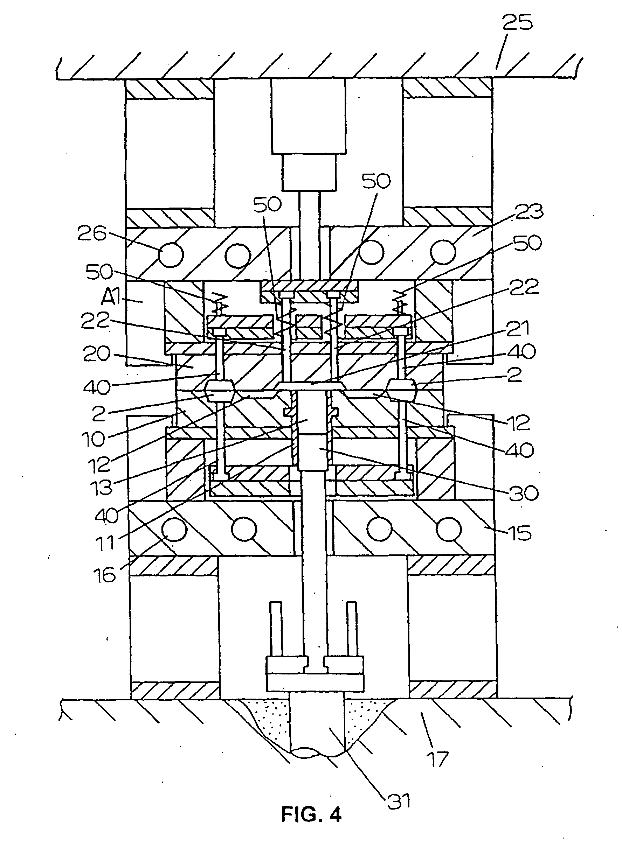

As shown in FIG. 4, the molding unit **A1** comprises an upper mold **20**, a lower mold **10** having a cylinder **11**, a plunger **30** slidable along an inner wall of the cylinder, and mold cavities **2** each of which is formed in a configuration of the molded article between the upper and lower molds. The upper mold **20** has a concave **21** for a cull, which is formed at a position facing to the cylinder **11**. When the upper mold **20** is clamped to the lower mold **10**, opposite side ends of the concave **21** connect with runners **12** formed on the lower mold. As a result, the mold cavities **2** are connected with an inside of the cylinder **11** through the runners **12** and the concave **21** to define resin channels. FIG. 4 shows one pair of the resin channels extending between the inside of the cylinder **11** and the mold cavities **2**. In this molding apparatus, the molding unit **A1** is formed with a plurality of cylinders **11** each having the pair of the resin channels.

The upper mold **20** has a pair of gate pins **22** projectable into the concave **21**. When tops of the gate pins **22** are pressed against a top surface of the lower mold **10**, the resin channels are closed. On the other hand, when the gate pins **22** are retracted from the concave **21**, the resin channels are opened.

The upper mold **20** is supported to an upper base **25** through an upper attachment board **23**. Similarly, the lower mold **10** is supported to a lower base **17** through a lower attachment board **15**. At least one of the upper base **25** and the lower base **17** can be moved up and down by a hydraulic-type or electric-type driving apparatus (not shown). In FIG. 4, numerals **26** and **16** designate holes respectively formed in the upper and lower attachment boards (**23**, **15**) to arrange therein heaters (not shown) for heating the upper and lower molds. In addition, numeral **31** designates a columnar rod for moving the plunger **30** up and down. Numeral **40** designates an ejector pin used to remove the molded article from the upper and lower molds. Numeral **50** designates a spring.

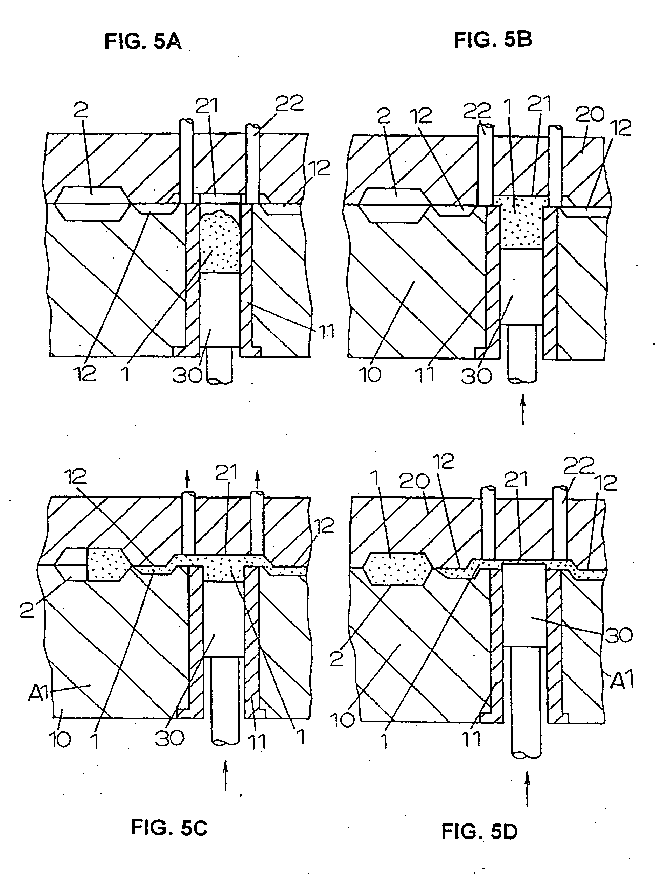

Prior to a transfer molding step with the use of the molding unit **A1**, lead frames **8** to be sealed with the resin material are transferred from a magazine rack **60** to a table **62** for preheating the lead frames by a supply pusher **61** of the unit **E**, as shown in FIG. 1. A positioning step of the lead frames **8** is also performed on the table **62**. After the upper mold is separated from the lower mold, the lead frames **8** on the table **62** are supplied into the mold cavities **2**. In addition, a powder-like resin material **1** such as a thermosetting resin stored in a hopper **101** of the unit **B** is measured by a measuring section **104** of the unit **B**, and then the measured resin material is supplied to a space **13** in each of the cylinders **11** of the lower mold **10**. Subsequently, as shown in FIG. 5A, the upper mold **20** is clamped to the lower mold **10**, and the resin channels are closed by the gate pins **22**. The upper and lower molds (**10**, **20**) are heated by the heaters to indirectly heat the resin material **1** charged into the cylinder **11.** The plunger **30** is then moved upwardly to press the resin material **1**, as shown in FIG. 5B. During this heating and pressing step of the resin material **1**, an air in the cylinder **11** including an air left in the powder-like resin material is exhausted through a clearance between the plunger **30** and the cylinder. To improve the exhaustion of the air in the cylinder **11** to the outside, a vacuum pump or the like may be preferably used.

Immediately after the resin material is heated and pressed to obtain a substantially melted state thereof, the gate pins **22** are retracted from the concave **21** to open the resin channels, as shown in FIG. 5C. The plunger **30** and the cylinder **11** are produced to tightly restricted dimensional tolerances such that the air in the cylinder can be exhausted to the outside through the clearance between the plunger and the cylinder, but the melted resin material can not sink into the clearance in a short time period. When the gate pins **22** are retracted, and the melted resin material is pressed by the plunger **30**, the melted resin material is injected into the mold cavities **2** through the runners **12**. The plunger **30** is moved upwardly until a top of the plunger reaches a position slightly higher than the top surface of the lower mold **10**, as shown in FIG. 5D, to finish the injection of the resin material **1** into the mold cavities **2**. As described above, since the air in the powder-like resin material is exhausted to the outside before the resin channels are opened, it is possible to produce good molded articles with no void by the resin material injected into the mold cavities **2**. In addition, the resin channels are opened when the resin material **1** is uniformly melted, therefore, it is possible to smoothly supply the melted resin material into the mold cavities.

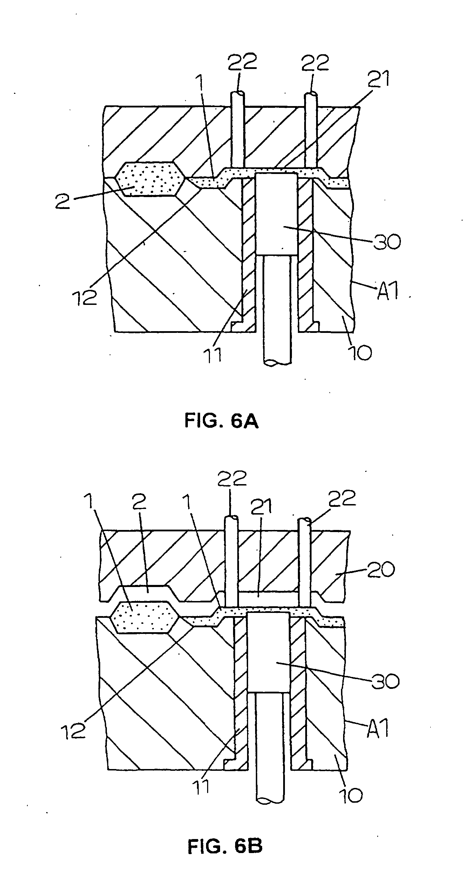

As shown in FIGS. 6A and 6B, after the injected resin material **1** cures in the mold cavities **2**, the molded articles can be removed from the mold cavities. The molded articles are chucked by the unit **D**, and then placed on a pick-up table **70**. The molded articles on the pick up table **70** are accommodated in a magazine rack **80** of the unit **F** by an action of a second pusher **71.**

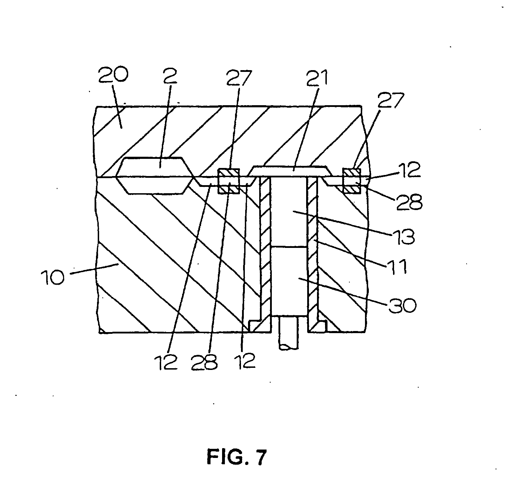

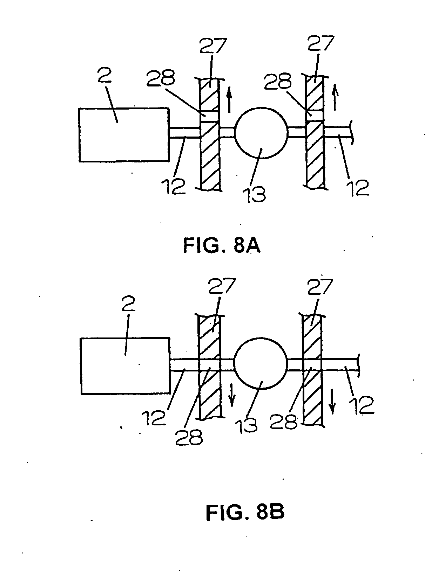

As a modification of the unit **A1**, it is possible to use slide blocks **27** in place of the gate pins **22**, as shown in FIG. 7. That is, each of the slide blocks **27** is slidably supported in a direction of crossing the runner **12** (resin channel), and has a through hole **28** extending in a lengthwise direction of the runner **12**. As shown in FIG. 8A, when the runner **12** is closed by the slide block **27**, a closed state of the resin channel is obtained. On the other hand, as shown in FIG. 8B, when the slide block **27** is moved in the direction of crossing the runner **12** such that the through hole **28** comes into a registration with the runner, an opened state of the resin channel is obtained.

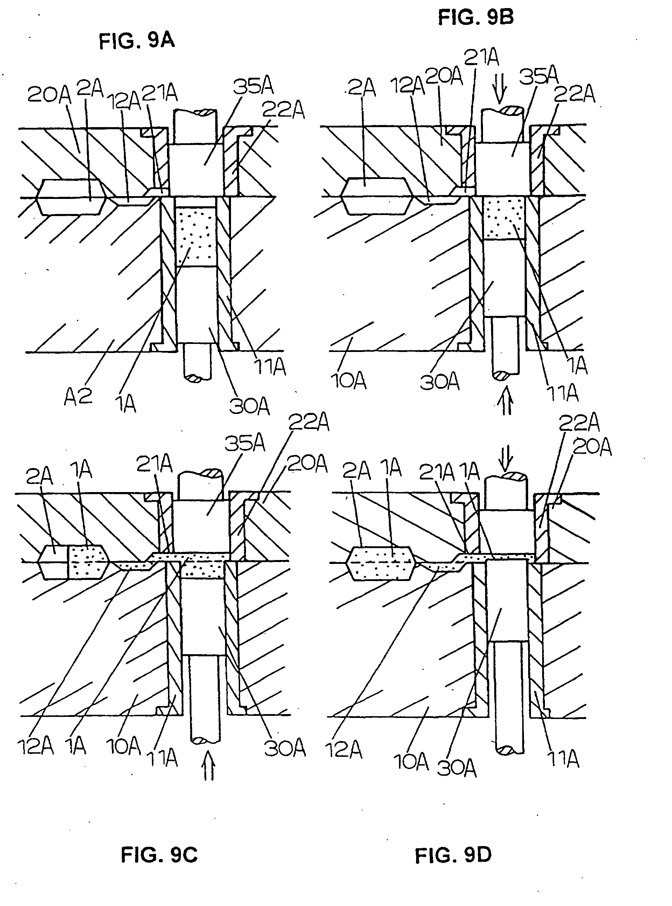

According to the invention it is possible to use a molding unit **A2** in place of the molding unit **A1**, as shown in FIGS. 9A to 9D. That is, the molding unit **A2** comprises an upper mold **20A**, a lower mold **10A** having a first cylinder **11A**, and a mold cavity **2A** which is formed in a configuration of a molded article between the upper and lower molds. The upper mold **20A** has a second cylinder **22A** having a lager diameter than the first cylinder **11A** of the lower mold **10A**. The upper mold **20A** is disposed on the lower mold such that an inside of the second cylinder **22A** is joined with that of the first cylinder **11A**. A second plunger **35A** is slidably supported along an inner wall of the second cylinder **22A**. The second plunger **35A** exhibits the functions similar to the gate pin **22** of the molding unit **A1**. Pressures can be applied to a first plunger **30A** and the second plunger **35A** by using pressure devices (not shown).

An upper runner **21A** extending to the inside of the second cylinder **22A** is formed in a bottom surface of the upper mold **20A**. A lower runner **12A** is formed in a top surface of the lower mold **10A** and adjacent to the first cylinder **11A**. When the upper mold **20A** is clamped to the lower mold **10A**, the mold cavity **2A** is connected with the inside of the second cylinder **22A** through the lower runner **12A** and the upper runner **21A** to define a resin channel. As shown in FIG. 9B, when the second plunger **35A** is pressed against the top surface of the lower mold **10A**, it intercepts between the upper runner **21A** and the inside of the first cylinder **11A** to obtain a closed state of the resin channel. As shown in FIG. 9C, when the second plunger **35A** is spaced away from the lower mold **10A**, the upper runner **21A** is joined with the inside of the first cylinder **11A** through the inside of the second cylinder **22A**, so that an opened state of the resin channel is obtained. In FIG. 9A, the resin channel extending to the mold cavity **2A** is drawn at only one side of the first cylinder **11A**. However, it is possible to form a plurality of similar resin channels around the first cylinder **11A**.

Prior to a transfer molding step with the use of the molding unit **A2**, a lead member such as a lead frame mounting thereon electronic components is set in the mold cavity **2A**. In addition, a required amount of a powder-like resin material **1A** such as a thermosetting resin is supplied into the first cylinders **11A** of the lower mold **10A**. Subsequently, as shown in FIG. 9A, the upper mold **20A** is clamped to the lower mold **10A**. In this time, since the second plunger **35A** is pressed against the top surface of the lower mold **10A**, the resin channel is kept in the closed state. The upper and lower molds (**20A**, **10A**) are heated by heaters to indirectly heat the resin material charged into the first cylinder **11A**. As shown in FIG. 9B, a second pressure greater than a first pressure applied to the first plunger **30A** is loaded to the second plunger **35A** toward the lower mold **10A** by the pressure device. Therefore, the second plunger **35A** does not retract even when the resin material is pressed by an upper movement of the first cylinder **11A**. During this heating and pressing step of the resin material **1A**, an air in the first cylinder **11A** including an air left in the powder-like resin material is exhausted through a clearance between the first plunger **30A** and the first cylinder.

Immediately after the resin material **1A** is heated and pressed to obtain a substantially melted state thereof, while the closed state of the resin channel being kept, the second pressure applied to the second plunger **35A** by the pressure device is released. The melted resin material is pressed by the first plunger **30A**, so that the second plunger **35A** is pushed up by the pressurized resin material **1A** to obtain the opened state of the resin channel. The first plunger **30A** and the first cylinder **11A** are produced to tightly restricted dimensional tolerances such that the air in the first cylinder can be exhausted to the outside through a clearance between the first plunger and the first cylinder, but the melted resin material can not sink into the clearance in a short time period. In this molding unit **A2**, a regulation force is applied to the second plunger **35A** by a pressure-regulating member such as a spring (not shown) such that an internal pressure of the melted resin material is maintained constant when the first plunger **30A** is moved upwardly by a predetermined force after the second pressure is released from the second plunger. This is useful to inject the melted resin material at a constant pressure into the mold cavity **2A**. In addition, when the upward movement of the second plunger **35A** is controlled to adjust the extent of opening the upper runner **21A**, it is possible to adequately determine a supply rate of the melted resin material into the mold cavity **2A**. The melted resin material **1A** pressurized by the first plunger **30A** flows into the mold cavity **2A** through the upper runner **21A** and the lower runner **12A**.

Next, as shown in FIG. 9D, the first plunger **30A** is moved upwardly to a position where a top of the first plunger slightly projects into the second cylinder **22A**, and fixed at the position. A pressure is applied to the second plunger **35A** to pressurize the melted resin material left in the second cylinder **22A** and inject it into the mold cavity **2A**. As result, the injection of the resin material **1A** into the mold cavity is finished. Moving the second plunger **35A** downwardly at the final stage of the injection is useful to stably supply the resin material into the mold cavity **2A** at a constant injection speed. In addition, the air left in the powder-like resin material is removed before the resin channel is opened, therefore, it is possible to produce a good molded article with no void by the resin material injected into the mold cavity **2A**. After the injection of the resin material into the mold cavity is finished, the molded article can be removed from the mold cavity according to a substantially same manner as the case of the molding unit **A1**.

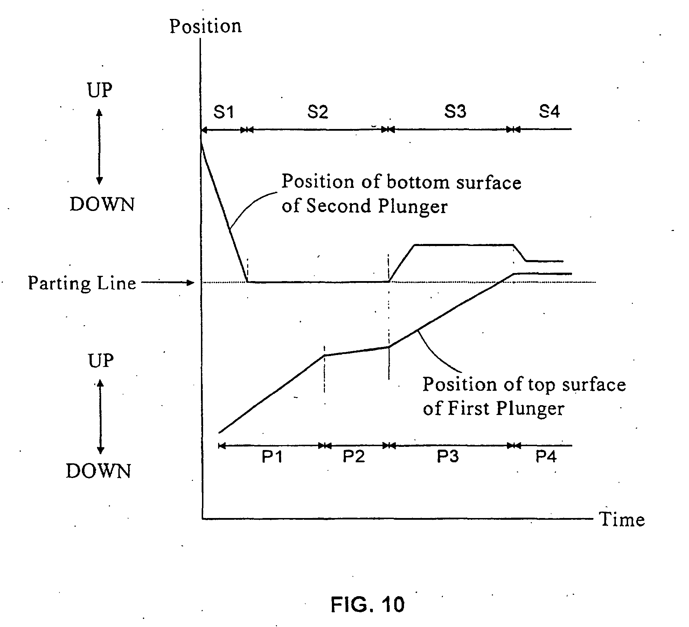

Referring to a diagram of the FIG. 10, the transfer molding step with the use of the molding unit **A2** is explained more concretely. The resin material **1A** is charged into the first cylinder **11A**, and then the second plunger **35A** is moved downwardly to close the resin channel (**S1** zone). After a bottom surface of the second plunger **35A** contacts the top surface of the lower mold **10A**, a pressure, e.g., about 500 kg/cm², is applied to the second plunger **35A** to maintain the position of the second plunger during the heating and pressing step of the resin material (**S2** zone). On the other hand, the resin material **1A** is heated and pressed between the first and second plungers (**30A**, **35A**) to exhaust the air left in the powder-like resin material to the outside (**P1** zone). In the **P1** zone, the resin material is gradually approaching its melted state. The lower mold **10A** and the upper mold **20A** are preheated at a required temperature. When a thermosetting resin is used as the resin material, both of the upper and lower molds (**20A**, **10A**) are preferably heated at a temperature of 165°C to 185°C. After the pressure applied to the first plunger **30A** reaches a predetermined pressure value, the pressurized resin material is kept for a time period, e.g., 0.5 to 2 seconds (**P2** zone). Since the exhaustion of the air left in the first cylinder **11A** to the outside continues during the time period, the first plunger **30A** slowly moves upwardly, as shown by the **P2** zone of FIG. 10. As the predetermined pressure value, it is preferred that an internal pressure of the resin material in the first cylinder **11A** is in a range of 100 to 300 kgf/cm². In the **P2** zone, the resin material is in a substantially melted state. Immediately after the elapse of this time period, the pressure applied to the second plunger **35A** is removed, and the first plunger **30A** is moved upwardly at a constant speed to pressurize the melted resin material (**P3** zone). The melted resin material pressurized by the first plunger **30A** pushes up the second plunger **35A** to make the opened state of the resin channel (**S3** zone). The melted resin material is injected into the mold cavity **2A** through the resin channel by a further upward movement of the first plunger **30A**. When the first plunger reaches a position where the top of the first plunger slightly projects into the second cylinder **22A**, e.g., a position higher than a parting line by about 1 mm, the first plunger **30A** is stopped and fixed to the position (**P4** zone). The melted resin material left in the second cylinder **22A** is pressurized by a downward movement of the second plunger **35A** (**S4** zone), and injected into the mold cavity **2A**, so that the injection of the resin material **1A** into the mold cavity is finished.

The motions of the first and second plungers are stopped when the mold cavity **2A** is filled with the melted resin material. Therefore, when a large amount of the resin material **1A** is charged into the first cylinder **11A**, the upward movement of the first plunger **30A** may be stopped at a position lower than the parting line within the **P3** zone. A time period from the opening of the resin channel to the end of injection of the melted resin material may be in a range of 3 to 15 seconds depending on scale of the molded article. When the thermosetting resin is used as the resin material, a curing time of the resin material may be within a range about 30 to 90 seconds. Since a curing reaction of the resin material starts when the resin material reaches the melted state, it is preferred to use an electric-type pressure device capable of controlling the motions of the first and second plungers with quick-response. In addition, when using the electric-type pressure device, it is possible to perform the transfer molding step under a clean environment, as compared with the case of using an hydraulic pressure device.

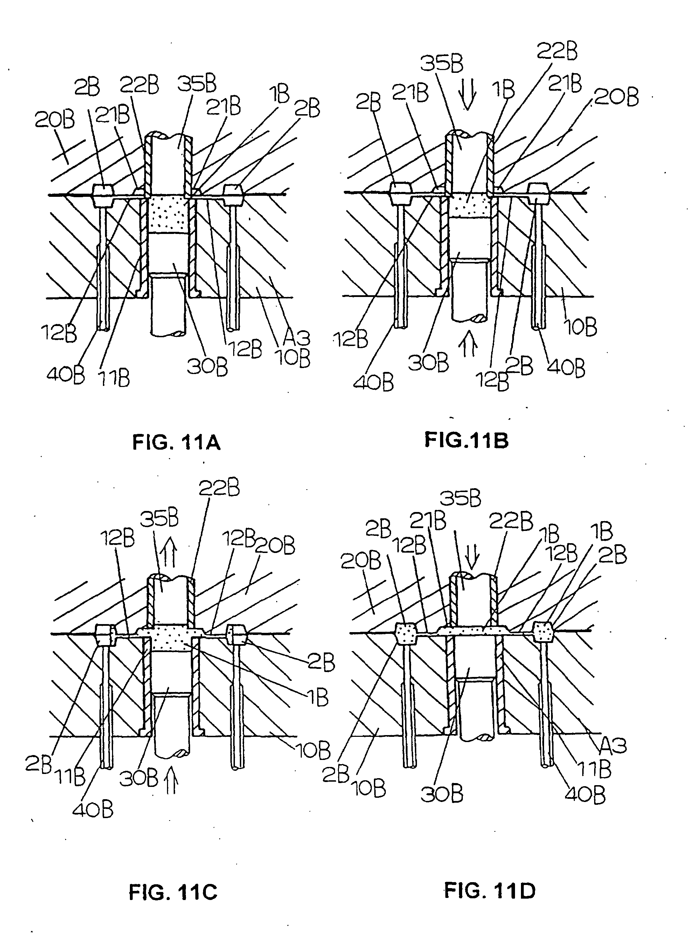

In the molding unit **A2**, the second cylinder **22A** having a diameter larger than the first cylinder **11A** is used. However, as shown in FIGS. 11A to 11D, it is possible to use a molding unit **A3** having a second cylinder **22B** having a diameter smaller than a first cylinder **11B**. That is, as shown in FIG. 11A, both of the second cylinder **22B** and a second plunger **35B** are moved downwardly such that an end surface of the second cylinder **22B** is pressed against a top surface of a lower mold **10B** to close upper runners **21B** of an upper mold **20B**. In this closed state of a resin channel, a first plunger **30B** is moved upwardly to pressurize a powder-like resin material **1B**, while the resin material being heated, as shown in FIG. 11B. At this time, since the second plunger **35A** is locked, it is not moved upwardly by the resin material **1B** pressurized by the first plunger **30B**. During this heating and pressing step of the resin material, an air in the first cylinder **11B** including an air left in the powder-like resin material is exhausted to the outside through a clearance between the first plunger **30B** and the first cylinder.

Immediately after the resin material **1B** is heated and pressed to obtain a substantially melted state thereof, while the closed state of the resin channel being kept, the second cylinder **22B** is moved upwardly to open the resin channel, and the locking of the second plunger **35B** is released to obtain a retractable state of the second plunger, as shown in FIG. 11C. At the same time, the first plunger **30B** is moved upwardly to push out the melted resin material into mold cavities **2B** through the upper runners **21B** and lower runners **12B**. When the first plunger **30B** reaches a required position, as shown in FIG. 11D, the motion of the first plunger is stopped and fixed to the position. Then a pressure is applied to the second plunger **35B** to push out the melted resin material left in the second cylinder **22B** into the mold cavities **2B** through the upper runners **21B**. As a result, the transfer molding step of the resin material **1B** into the mold cavities **2B** is finished. In FIG. 11A, numeral **40B** designates an ejector used to remove the molded article from the mold cavity **2B**.

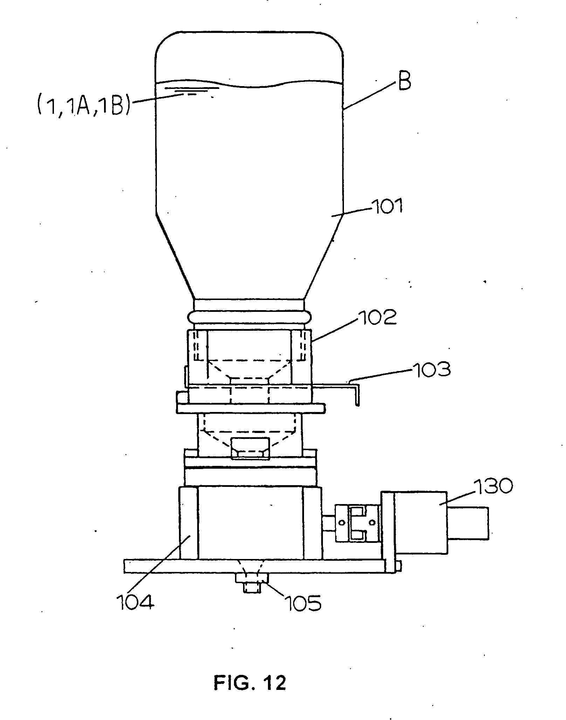

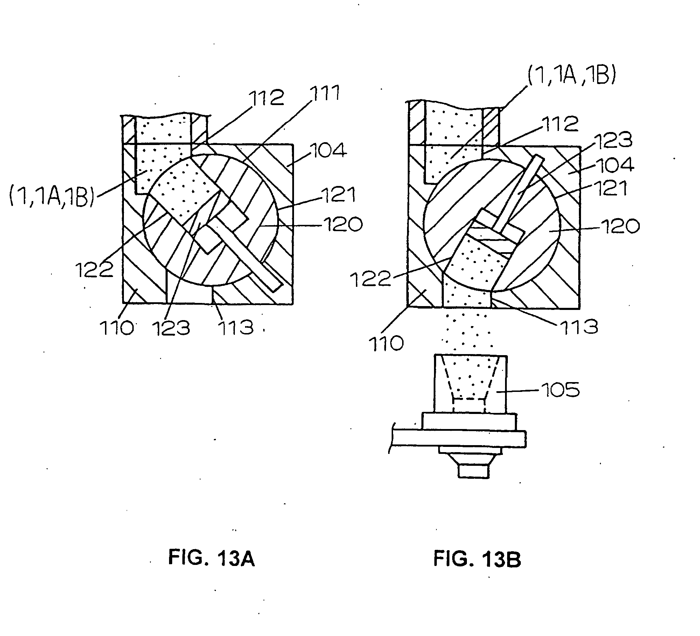

For accurately measuring the powder-like resin material (**1**, **1A**, **1B**) and efficiently supplying the measured resin material to the molding unit (**A1**, **A2**, **A3**), as shown in FIG. 12, the unit **B** comprises a hopper **101** used as a cartridge vessel for storing therein the powder-like resin material, a supporting section **102** for detachably supporting the hopper, a shutter **103**, a measuring section **104** for measuring a required amount of the resin material supplied from the hopper, and a supplying section **105** of the measured resin material. As shown in FIGS. 13A and 13B, the measuring section **104** comprises a case **110** having a circular cave **111**, a columnar rotor **120** having a peripheral surface **121** to be fitted to an inner surface of the circular cave and a measuring hole **122** formed in the peripheral surface, a measuring plunger **123** slidable along an inner wall of the measuring hole, and a plunger-position adjusting unit (not shown) for controlling a position of the measuring plunger in the measuring hole. The case **110** has a first through hole **112** extending between the circular cave **111** and a top surface of the case, and a second through hole **113** extending between the circular cave and a bottom surface of the case. The resin material (**1**, **1A**, **1B**) in the hopper **101** is supplied to the first through hole **112**. The columnar rotor **120** is rotatably supported about its axis between a first position where the first through hole **112** comes into a registration with the measuring hole **122**, as shown in FIG. 13A, and a second position where the second through hole **113** comes into a registration with the measuring hole, as shown in FIG. 13B. In FIG. 12, numeral **130** designates a rotary actuator for rotating the columnar rotor **120**. The adjusting unit adjusts the position of the measuring plunger **123** such that a measuring space surrounded with the inner surface of the circular cave **111**, the inner wall of the measuring hole **122** and the measuring plunger **123**, is substantially equal to a volume of the required amount of the resin material. The resin material supplied into the measuring hole **122** through the first through hole **112** at the first position is transferred to the supplying section **105** through the second through hole **113** by the rotation of the columnar rotor **120** to the second position.

### LIST OF REFERENCE NUMERALS

- 1: powder-like resin material
- 2: mold cavity
- 8: frame
- 10: lower mold
- 11: cylinder
- 12: runner
- 13: space
- 15: lower attachment board
- 16: hole
- 17: lower base
- 20: upper mold
- 21: concave
- 22: gate pin
- 23: upper attachment board
- 25: upper base
- 26: hole
- 27: slide block
- 28: through hole
- 30: plunger
- 31: columnar rod
- 40: ejector pin
- 50: spring
- 60: magazine rack
- 61: supply pusher
- 62: table
- 70: pick-up table
- 71: second pusher
- 80: magazine rack
- 101: hopper
- 102: supporting section
- 103: shutter
- 104: measuring section
- 105: supplying section
- 110: case
- 111: circular cave
- 112: first through hole
- 113: second through hole
- 120: columnar rotor
- 121: peripheral surface
- 122: measuring hole
- 123: measuring plunger

- 130: rotary actuator
- 1A: powder-like resin material
- 2A: mold cavity
- 10A: lower mold
- 11A: first cylinder
- 12A: lower runner
- 20A: upper mold
- 21A: upper runner
- 22A: second cylinder
- 30A: first plunger
- 35A: second plunger

- 1B: powder-like resin material
- 2B: mold cavity
- 10B: lower mold
- 11B: first cylinder
- 12B: lower runner
- 20B: upper mold
- 21B: upper runner
- 22B: second cylinder
- 30B: first plunger
- 35B: second plunger
- 40B: ejector

- 1D: powder-like resin material
- 2D: mold cavity
- 10D: lower mold
- 11D: lower cylinder
- 12D: runner
- 13D: inner space
- 20D: upper mold
- 21D: concave
- 30D: plunger

## Claims

1. A resin molding apparatus for forming a molded article from a powder-like resin material (1A) comprising:
an upper mold (20A);
a lower mold (10A) having a first cylinder (11A);
heating means for heating said upper mold and said lower mold;
a plunger (30A) slidable along an inner wall of said first cylinder, said resin material being charged into a space surrounded with said inner wall of said first cylinder, said plunger, and said upper mold disposed at the opposite side of said plunger;
a mold cavity (2A) formed in a configuration of said molded article between said upper mold and said lower mold;
a runner (12A, 21A) connecting between said mold cavity and said space into which said resin material is charged; and
gate means (35A) movable between a close position of said runner, where said resin material charged into said space is pressed by a movement of said plunger while being indirectly heated by said heating means, and an open position of said runner, where said resin material in a substantially melted state is pressed and supplied to said mold cavity by a further movement of said plunger,
**characterised in that** said upper mold (20A) comprises:
a second cylinder (22A), said upper mold being disposed on said lower mold such that an inside of said second cylinder is joined with that of said first cylinder; and
a second plunger (35A) acting as said gate means which is slidable along an inner wall of said second cylinder (22A), said second plunger making the close position of said runner (21A) when being pressed against said lower mold.

2. The molding apparatus of claim 1, wherein said second cylinder (22A) has a larger diameter than said first cylinder (11A), and said upper mold (20A) further comprises:
pressure loading means for applying a load to said second plunger toward said lower mold to press said resin material (1A) between said plunger and said second plunger while keeping the close position of said runner; and
pressure release means for removing said load applied to said second plunger, said second plunger making the open position of said runner when being spaced away from said lower mold.

3. The molding apparatus of claim 1 or 2, wherein
said gate means is formed with a slide block (27) which is slidably supported in a direction of crossing said runner (12A), said slide block having a through hole (28) extending in a lengthwise direction of said runner, and
the open position of said runner is obtained when said slide block is moved in said direction of crossing said runner such that said through hole comes into registration with said runner.

4. The molding apparatus of any preceding claim, wherein said gate means is formed with a pin (22) projectable into said runner (12A).

5. The molding apparatus of any preceding claim, comprising
a cartridge vessel (101) for storing therein said resin material (1A),
support means (102) for detachably supporting said cartridge vessel,
measuring means (104) for measuring a required amount of said resin material supplied from said cartridge vessel, and
supply means (105) for supplying the required amount of said resin material into said first cylinder (11A).

6. The molding apparatus of claim 5, wherein said measuring means (104) comprises:
a case (110) having a circular cave (111), a first through hole (112) extending between said circular cave and a top surface of said case, and a second through hole (113) extending between said circular cave and a bottom surface of said case, said resin material (1A) of said cartridge vessel being supplied to said first through hole;
a columnar rotor (120) having a peripheral surface (121) to be fitted to an inner surface of said circular cave, and a measuring hole (122) formed in said peripheral surface, said columnar rotor being rotatably supported about its axis between a first position where said first through hole comes into a registration with said measuring hole, and a second position where said second through hole comes into a registration with said measuring hole;
a third plunger (123) slidable along an inner wall of said measuring hole; and
means for adjusting a position of said third plunger such that a measuring space surrounded with said inner surface of said circular cave, said inner wall of said measuring hole and said third plunger has substantially the same volume as the required amount of said resin material,
wherein said resin material supplied into said measuring hole through said first through hole at said first position of said columnar rotor (120) is transferred to said supply means (105) through said second through hole by a rotation of said columnar rotor to said second position.

## Patentansprüche

1. Harzformgerät zum Bilden eines Formgegenstands aus einem pulverförmigen Harzmaterial (1A), mit:
einem oberen Formteil (20A);
einem unteren Formteil (10A) mit einem ersten Zylinder (11A);
einer Heizeinrichtung zum Heizen des oberen und des unteren Formteils;
einem entlang einer Innenwand des ersten Zylinders verschiebbaren Kolben (30A), wobei das Harzmaterial in einen Raum eingebracht wird, der von der Innenwand des ersten Zylinders, dem Kolben und dem am entgegengesetzten Ende des Kolbens angeordneten oberen Formteil umgeben ist;
einem Formhohlraum (2A); der in einer Konfiguration des Formgegenstands zwischen dem oberen und dem unteren Formteil gebildet ist;
einem Kanal (12A, 21A), der den Formhohlraum und den Raum, in den das Harzmaterial eingebracht ist, verbindet; und
einer Sperreinrichtung (35A), die zwischen einer geschlossenen Kanalposition, in der das in den Raum eingebrachte Harzmaterial durch eine Kolbenbewegung gepreßt wird, während es indirekt durch die Heizeinrichtung'geheizt wird, und einer offenen Kanalposition, in der das Harzmaterial in einem im wesentlichen geschmolzenen Zustand gepreßt und durch eine weitere Kolbenbewegung in den Formhohlraum geführt wird, bewegbar ist,
**dadurch gekennzeichnet, daß** das obere Formteil (20A) aufweist:
einen zweiten Zylinder (22A), wobei das obere Formteil so über dem unteren.Formteil angeordnet ist, daß eine Innenseite des zweiten Zylinders mit der des ersten Zylinders verbunden ist; und
einen zweiten Kolben (35A), der als die Sperreinrichtung fungiert, die längs einer Innenwand des zweiten Zylinders .(2?A) verschiebbar ist, wobei der zweite Kolben durch Pressen gegen das untere Formteil die geschlossene Position des Kanals (21A) herstellt.

2. Formgerät nach Anspruch 1, wobei der zweite Zylinder (22A) einen größeren Durchmesser aufweist als der erste Zylinder (11A), und das obere Formteil (20A) ferner aufweist:
eine Druckbelastungseinrichtung zum Anlegen einer Last an den zweiten Kolben in Richtung des unteren Formteils, um das Harzmaterial (1A) zwischen dem Kolben und dem zweiten Kolben zu pressen, während die geschlossene Kanalposition gehalten wird; und
eine Druckfreigabeeinrichtung zum Entfernen der auf den zweiten Kolben einwirkenden Last, wobei der zweite Kolben durch Entfernung von dem unteren Formteil die offene Kanalposition herstellt.

3. Formgerät nach Anspruch 1 oder 2, wobei
die Sperreinrichtung durch einen Schiebeblock (27) gebildet ist, der verschiebbar in einer den Kanal (12A) kreuzenden Richtung gehalten ist, wobei der Schiebeblock ein Durchgangsloch (28) aufweist, das in einer Längsrichtung des Kanals verläuft, und
die offene Kanalposition erhalten wird, indem der Schiebeblock in der den Kanal kreuzenden Richtung bewegt wird, so daß das Durchgangsloch paßgenau zu dem Kanal liegt.

4. Formgerät nach einem der vorstehenden Ansprüche, wobei die Sperreinrichtung durch einen Bolzen (22) gebildet ist, der in den Kanal (12A) vorschiebbar ist.

5. Formgerät nach einem der vorstehenden Ansprüche, mit
einem Kartuschengefäß (101) zum Speichern des Harzmaterials (1A),
einer Halteeinrichtung (102) zur abnehmbaren Halterung des Kartuschengefäßes,
einer Meßeinrichtung (104) zum Messen einer benötigten Harzmaterialmenge, die von dem Kartuschengefäß zugeführt wird, und
einer Zuführeinrichtung (105) zum Zuführen der benötigten Harzmaterialmenge in den ersten Zylinder (11A).

6. Formgerät nach Anspruch 5, wobei die Meßeinrichtung (104) umfaßt:
ein Gehäuse (110) mit einer runden Aushöhlung (111), einem ersten Durchgangsloch (112), das zwischen der runden Aushöhlung und einer Oberseitenfläche des Gehäuses verläuft, und einem zweiten Durchgangsloch (113), das zwischen der runden Aushöhlung und einer Unterseitenfläche des Gehäuses verläuft, wobei das Harzmaterial (1A) des Kartuschengefäßes zu dem ersten Durchgangsloch geführt wird;
einen säulenartigen Rotor (120) mit einer Umfangsfläche (121) zum Einpassen in eine Innenfläche der runden Aushöhlung und einem in der Umfangsfläche gebildeten Meßloch (122), wobei der säulenartige Rotor drehbar um seine Achse zwischen einer ersten Position, in der das erste Durchgangsloch paßgenau zu dem Meßloch liegt, und einer zweiten Position, in der das zweite Durchgangsloch paßgenau zu dem Meßloch liegt, gelagert ist;
einen dritten Kolben (123), der längs einer Innenwand des Meßlochs verschiebbar ist; und
eine Einrichtung zum Anpassen einer Position des dritten Kolbens, so daß ein Meßraum, der von der Innenfläche der runden Aushöhlung, der Innenwand des Meßlochs und dem dritten Kolben umgeben ist, im wesentlichen das gleich Volumen aufweist wie die benötigte Harzmaterialmenge,
wobei das Harzmaterial, das durch das erste Durchgangsloch in der ersten Position des säulenartigen Rotors (120) in das Meßloch geführt wurde, durch das zweite Durchgangsloch durch Drehung des säulenartigen Rotors in die zweite Position .zu der Zuführeinrichtung (105) weitergeleitet wird.

## Revendications

1. Dispositif de moulage de résine pour former un article moulé à partir d'un matériau de résine en poudre (1A), comprenant :
un moule supérieur (20A) ;
un moule inférieur (10A) comportant un premier cylindre (11A) ;
des moyens de chauffage pour chauffer ledit moule supérieur et ledit moule inférieur ;
un piston (30A) pouvant coulisser le long d'une paroi intérieure dudit premier cylindre, ledit matériau de résine étant chargé dans un espace entouré par ladite paroi intérieure dudit premier cylindre, ledit piston et ledit moule supérieur disposé à l'extrémité opposée dudit piston ;
une cavité de moulage (2A) formée sous la configuration dudit article moulé entre ledit moule supérieur et ledit moule inférieur ;
un canal de coulée (12A, 21A) assurant la liaison entre ladite cavité de moulage et ledit espace dans lequel est chargé ledit matériau de résine ; et
des moyens formant porte (35A) mobiles entre une position fermée dudit canal de coulée, dans laquelle ledit matériau de résine chargé dans ledit espace est pressé par le déplacement dudit piston tout en étant chauffé indirectement par lesdits moyens de chauffage, et une position ouverte dudit canal de coulée, dans laquelle ledit matériau de résine dans un état sensiblement fondu est pressé et délivré à ladite cavité de moulage par un déplacement additionnel dudit piston,
**caractérisé en ce que** ledit moule supérieur (20A) comprend :
un deuxième cylindre (22A), ledit moule supérieur étant disposé sur ledit moule inférieur de telle sorte que l'intérieur dudit deuxième cylindre soit réuni à celui dudit premier cylindre ; et
un deuxième piston (35A) jouant le rôle desdits moyens formant porte, qui peut coulisser le long d'une paroi intérieure dudit deuxième cylindre (22A), ledit deuxième piston établissant la position fermée dudit canal de coulée (21A) lorsqu'il est appuyé contre ledit moule inférieur.

2. Dispositif de moulage selon la revendication 1, dans lequel ledit deuxième cylindre (22A) a un diamètre supérieur à celui dudit premier cylindre (11A), et ledit moule supérieur (20A) comprend de plus :
des moyens de charge de pression pour appliquer une charge audit deuxième piston vers ledit moule inférieur afin de presser ledit matériau de résine (1A) entre ledit piston et ledit deuxième piston tout en maintenant la position fermée dudit canal de coulée ; et
des moyens de relâchement de pression pour retirer ladite charge appliquée audit deuxième piston, ledit deuxième piston établissant la position ouverte dudit canal de coulée lorsqu'il est éloigné dudit moule inférieur.

3. Dispositif de moulage selon la revendication 1 ou 2, dans lequel :
lesdits moyens formant porte sont formés avec un bloc de coulissement (27) qui est supporté de façon à pouvoir coulisser dans une direction de croisement dudit canal de coulée (12A), ledit bloc de coulissement comportant un trou traversant (28) s'étendant dans la direction de la longueur dudit canal de coulée, et
la position ouverte dudit canal de coulée est obtenue lorsque ledit bloc de coulissement est déplacé dans ladite direction de croisement dudit canal de coulée de telle sorte que ledit trou traversant vienne en alignement avec ledit canal de coulée.

4. Dispositif de moulage selon l'une quelconque des revendications précédentes, dans lequel lesdits moyens formant porte sont formés avec une broche (22) pouvant faire saillie à l'intérieur dudit canal de coulée (12A).

5. Dispositif de moulage selon l'une quelconque des revendications précédentes, comprenant :
un récipient-cartouche (101) pour stocker à l'intérieur de celui-ci ledit matériau de résine (1A),
des moyens de support (102) pour supporter de façon détachable leur ledit récipient-cartouche,
des moyens de mesure (104) pour mesurer une quantité requise dudit matériau de résine délivré à partir dudit récipient-cartouche, et
des moyens de délivrance (105) pour délivrer la quantité requise dudit matériau de résine dans ledit premier cylindre (11A).

6. Dispositif de moulage selon la revendication 5, dans lequel lesdits moyens de mesure (104) comprennent :
un boîtier (110) comportant une cavité circulaire (111), un premier trou traversant (112) s'étendant entre ladite cavité circulaire et une surface supérieure dudit boîtier, et un deuxième trou traversant (113) s'étendant entre ladite cavité circulaire et une surface inférieure dudit boîtier, ledit matériau de résine (1A) dudit récipient-cartouche étant délivré audit premier trou traversant ;
un rotor en colonne (120) comportant une surface périphérique (121) destinée à être fixée à une surface intérieure de ladite cavité circulaire, et un trou de mesure (122) formé dans ladite surface périphérique, ledit rotor en colonne étant supporté de façon à pouvoir tourner autour de son axe entre une première position dans laquelle ledit premier trou traversant vient en alignement avec ledit trou de mesure, et une deuxième position dans laquelle ledit deuxième trou traversant vient en alignement avec ledit trou de mesure ;
un troisième piston (123) pouvant coulisser le long d'une paroi intérieure dudit trou de mesure ; et
des moyens pour ajuster une position dudit troisième piston de telle sorte qu'un espace de mesure entouré par ladite surface intérieure de ladite cavité circulaire, ladite paroi intérieure dudit trou de mesure et ledit troisième piston ait sensiblement un volume identique à celui de la quantité requise dudit matériau de résine,
dans lequel ledit matériau de résine délivré dans ledit trou de mesure par l'intermédiaire dudit premier trou traversant dans ladite première position dudit rotor en colonne (120) est transféré auxdits moyens de délivrance (105) par l'intermédiaire dudit deuxième trou traversant par une rotation dudit rotor en colonne dans ladite deuxième position.
